Europäisches Patentamt

European Patent Office

Office européen des brevets

(11) Publication number: **0 001 656**
**B2**

(12) **NEW EUROPEAN PATENT SPECIFICATION**

(45) Date of publication of the new patent specification: **10.04.85**

(21) Application number: **78200230.7**

(22) Date of filing: **09.10.78**

(51) Int. Cl.⁴: **F 16 G 13/16, B 65 G 17/38**

(54) **Cable supporting chain for machine parts moving in a straight line.**

(30) Priority: **13.10.77 IT 2856477**

(43) Date of publication of application:
**02.05.79 Bulletin 79/09**

(45) Publication of the grant of the patent:
**10.04.85 Bulletin 85/15**

(45) Mention of the opposition decision:
**30.12.81 Bulletin 81/52**

(84) Designated Contracting States:
**BE CH DE FR GB LU NL SE**

(56) References cited:
**DE-A-2 126 255**
**DE-B-1 932 428**
**DE-B-1 935 360**
**DE-B-2 321 633**
**DE-C- 963 077**
**DE-C-1 131 480**
**FR-A-2 200 929**
**GB-A-1 400 109**
**US-A-3 330 105**

(73) Proprietor: **MAURI, Giovanni**
**20, Via dei Prati**
**I-20052 MONZA (IT)**

(72) Inventor: **MAURI, Giovanni**
**20, Via dei Prati**
**I-20052 MONZA (IT)**

(74) Representative: **Kuborn, Jacques et al**
**Office Hanssens S.P.R.L. Square Marie-Louise,**
**40 (bte 19)**
**B-1040 Bruxelles (BE)**

(56) References cited:
**US-A-3 448 954**
**US-A-3 503 579**
**US-A-3 848 407**
**US-A-3 921 388**

**"Kabelschlepp Energieführungsketten in aller Welt", Ausgabe September 1959, Seite 36**
**"Deutsche Hebe- und Fördertechnik" 4/74, Seiten 80-82, Steinmetz:**

**"Energieführungsketten und- Einrichtungen auf dem Dauerprüfstand"**

Courier Press, Leamington Spa, England.

## Description

The invention relates to a chain comprising modular link elements of plastics material and arranged in two sets interconnected by cross-pieces for supporting cables, hoses of the like, the elements in each set being connected by joints each of which comprises a male portion on one element and a female portion on an adjacent element, the male portion being received by and pivoted to the female portion. Such chains are commonly used for carrying cables, hoses or the like, connected to machine parts which move in a straight line, such as the slides or saddles of machine tools, where it is necessary to support power transmission cables, hydraulic hoses and the like during the traverse movements of the machine, so as to protect the cables and hoses from torsional and tensile stresses and to maintain uniform their bending radius.

In a preceding patent of the same Applicant (U.K. Patent Specification No. 1400109 and DE—B 2321633) a cable supporting chain is disclosed, having modular link elements of a plastics material of suitable thickness and stiffness, which do not require reinforcing elements and may be sequentially assembled by means of joints comprising male and female portions, arranged at the ends of each element, so that said modular link elements form two sets interconnected by cross-pieces for supporting cables, hoses and the like. Such a cable supporting chain also provided means for fitting covers to completely enclose the cables and hoses or the like carried by the chain. Such a chain however, did not allow great loads nor allowed the bending radius to be changed when using always the same modular link elements. Furthermore the chain was subject to jamming because of chips and working materials which were introduced into the pivoting seats of the link elements. The elements of the cable holding chain according to said preceding patent had also a rather complicated form, thus requiring complicated and expensive moulds, with the consequence of a high cost of the modular link and a number of manufacturing rejections.

Other cable supporting chains are disclosed in German Patent Specifications DE—A 19 35 360, DE—C 963 077, DE—A 19 32 428, DE—C 11 31 480 and in U.S. Patent Specifications Nos. 3 330 105, 3 503 579, 3 448 954, 3 848 407 and 3 921 888.

All of the cable supporting chains disclosed in the prior art have a gauge determined by the length of the cross-pieces interconnecting the two sets of modular link elements and there is no provision for adjusting the gauge of the chain to suit a particular application. Nor is there any suggestion of how this may be achieved in any simple and convenient manner.

According to this invention we propose a chain in which each cross-piece has at each end a leg adapted for connection to one of the said elements, the distance.therebetween defining the gauge of the chain, and intermediate the end legs another leg spaced at a different distance from each of the two end legs, whereby three different chain gauges can be obtained using either the entire cross-piece or one or other cross-piece produced by cutting the cross-piece at the intermediate leg. Preferably, each cross-piece is formed in two symmetrical halves and is arranged to bridge the two sets of modular link elements with the legs on one half confronting or abutting the legs on the other half.

Further, I propose a preferred embodiment of a chain in accordance with the present invention, wherein relative pivotal movement of adjacent elements is limited by co-operation of a projection on one element and a recess on the other element, the projection and recess being disposed such that they engage within the female portion at the root thereof, wherein each element has an ellipsoid form whereby, at the limit of pivotal movement, at least the outer edge (with respect to the curvature of the chain) of the elements in each set define a substantially continuous curved contour, and wherein the end of the female portion is curved and runs in a complementary curved recess at the root of the male member.

The amount of pivotal movement is determined by the relative size of the projection and the recess and can be adjusted simply by trimming one or other of these elements.

The preferred embodiment of a chain according to the present invention removes many of the drawbacks associated with prior art chains, because its elements are of a much simpler shape and therefore require less expensive moulds. The chain enables adjustment of the bending radius using the same modular link elements, higher loads and a greater sturdiness because the modular elements are of much simpler shape and therefore require less complicated and expensive moulds.

As a consequence the link height is greater and therefore it may contain more cables or be used for wider cables. The structure of rotation system is different from that of the prior art chains and prevents working chips and foreign matter present in the working environment from entering the pivoting place of the elements so as to cause jamming of the chain.

An embodiment of the invention will now be described by way of example with reference to the accompanying drawings, of which:

Fig. 1 is a part sectioned side view of a link modular element;

Fig. 2 is an end view of the element of Fig. 1;

Fig. 3 is a view on the other side of the element shown in Fig. 1;

Fig. 4 is a partially sectioned side view of two adjacent modular elements showing joint therebetween and illustrating how pivotal movement is effected;

Fig. 5 is a plan view of a portion of a cable supporting chain;

Fig. 6 is a plan view similar to Fig. 5 but on an enlarged scale, of a portion of cable supporting chain and showing only one lateral set of elements; and

Fig. 7 is a perspective view of a modular cable supporting cross-piece, the two halves forming the cross-piece being shown slightly separated for clarity.

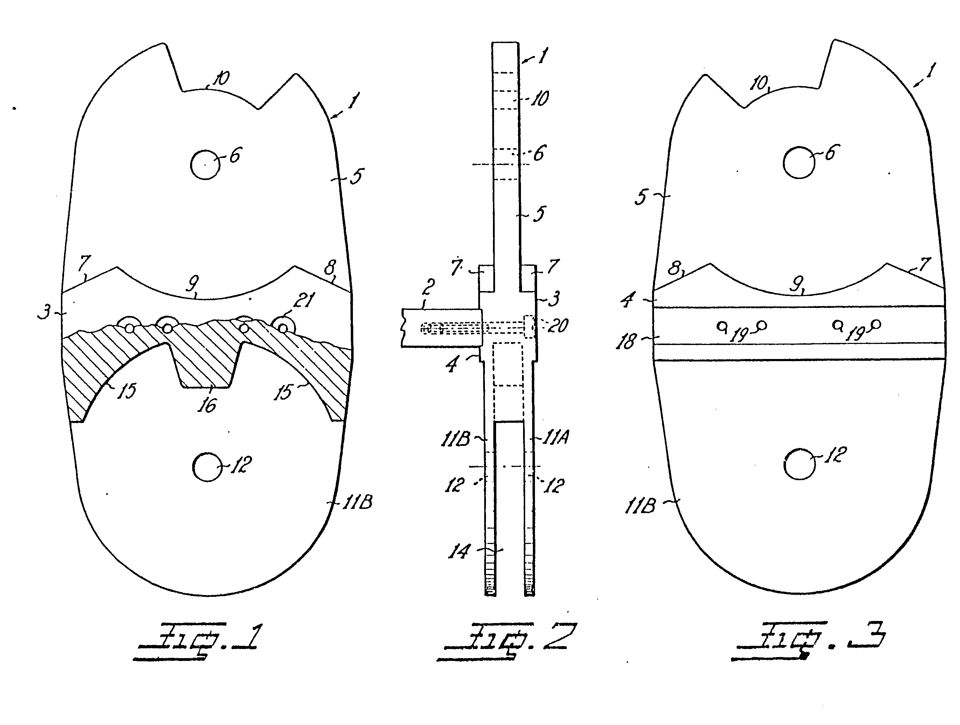

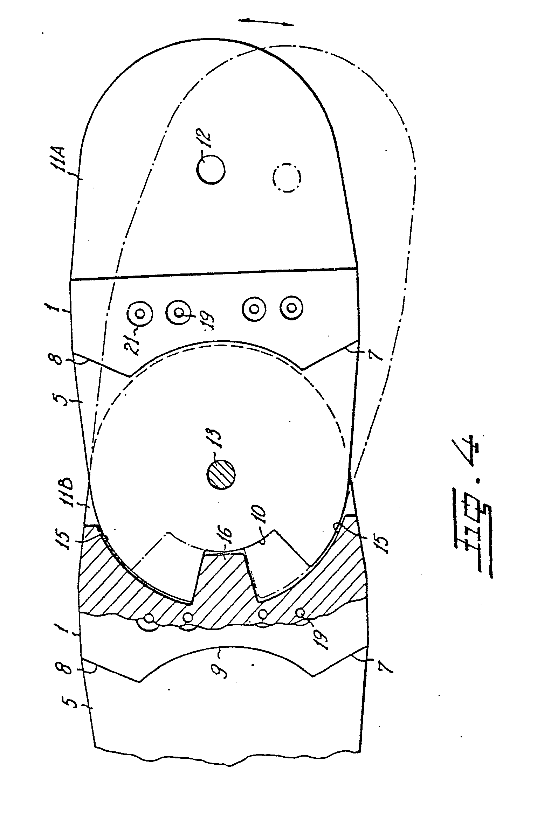

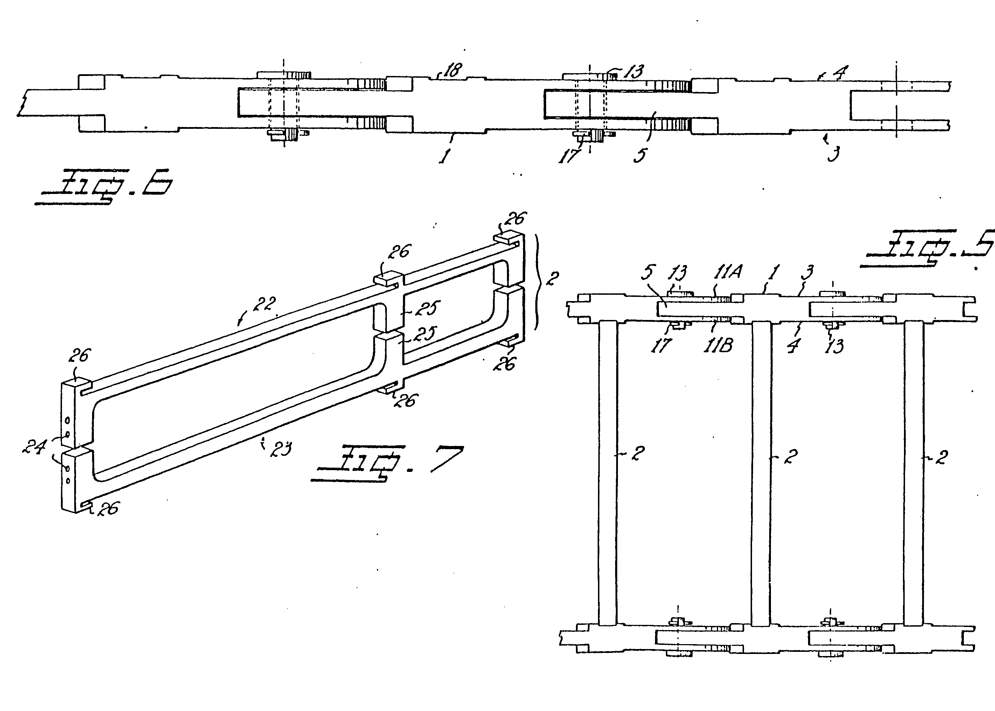

With reference now to the figures, the chain comprises two sides each formed by a set of link elements 1 made of moulded nylon reinforced with glass powder so as to obtain a greater stiffness, the two sides being connected together by cross-pieces 2 for supporting the cables or hoses.

Each modular link element 1 has a shape generally resembling an ellipsoid and has an outside face or surface 3 and an inside face or surface 4 as clearly shown in the figures of the accompanying drawings.

The modular link elements 1 have a reduced central body and flanged ends comprising the terminal curved portions of the ellipsoid and defining male and female portions whereby adjacent elements can be joined together. In other words, each modular element 1 has one male portion and at the opposite end a female portion.

Each male portion constitutes a flange or protruding extension 5 having a hole 6 through which is fitted a connecting link stud to act as a pivot. At both inside and outside faces and at both upper and lower edges the central body portion of the link element has two shoulders 7 and 8 facing the flange of the male portion as well as a central semicircular recess 9 for receiving and in which runs the curved end of the female portion. On the curved end of the male portion or flange there is a recess 10, which may be of variable width according to the radius of curvature intended for the specific cable supporting chain. The recess 10 is not arranged centrally on the longitudinal axis of the link element, but it is offset in the curved end in the direction in which the cable supporting chain is intended to curve. In view of the material of which the elements are made, the width of the cut or recessed cavity may be varied by trimming further pieces of material from the beveled lateral walls of the recess.

The end of each of the flanges 11A and 11B defining the female portion if formed so as to be complementary with the curved end of the male portion and in each flange is a hole 12 through which the connecting link stud 13 passes. The two flanges of the female portion define a central slot 14 into which fits the male portion of the next adjacent element, and the root of the slot is defined by a semicircular wall 15 receiving the curved end of the male portion, said wall bearing a central projection 16 which co-operates with the recess 10 to limit the pivotal movement of the adjacent elements.

Adjacent link elements 1 are joined together by inserting the male portion in the female portion and fixing them by the link stud 13 which passes through the holes 6 and 12 in the flange 5 of the male portion and the flanges 11A and 11B of the female portion, and is secured by a split pin 17.

Each link element 1 has a central channel 18 on the inside surface, forming a seat for the end legs of a cross-piece 2 interconnecting the two sets of links and supporting the cables, hoses and the like. Along the channel 18 there are four holes 19 for screws 20 fastening the cross-pieces, which may be of any suitable size and may be vertically displaced in respect of the chain links, according to the number and the diameter of cables and hoses to be supported. On the outside face each hole 19 is countersunk at 21 so as to facilitate tightening of the screws 20. The link elements of one set of the chain are therefore arranged inverted so that the inside surfaces of the sets bearing the channel 18, confront one another.

The length of the cross-pieces 2 determine the gauge of the chain and it may be that a different gauge is required in a particular application according to the number and size of the cables to be supported.

For simplicity and consistency with the modular nature of the system described above, the cross-pieces 2 are formed in two symmetrical halves 22 and 23, arranged with the end legs thereof juxtaposed and fixed to the modular link elements 1 by the above mentioned screws 20 which are screwed in holes 24. Intermediate the end legs is another leg 25, so that with only one cross-piece modular element 2 it is possible to obtain three different guages, whether the entire cross-piece, or only the longer or the shorter part of it being used by cutting the cross-piece at said intermediate leg. It is not necessary that cross-pieces 2 are fitted at each link of the chain, but especially when cables or hoses of a considerable size and/or stiffness are supported it is sufficient to apply one cross-piece 2 every two or three links of the chain.

An important feature of the cross-pieces is that lateral slots 26 are formed on both upper and lower ends of the end legs and leg 25 for receiving cover sheets formed from metal or other suitable material in order to enclose the cables or hoses within the cross-pieces 2, thereby offering protection in both forward and return length of the chain, against the ingress of chips or swarf falling from the machine tool, from dust or humidity or anything else which could damage the cables or hoses.

**Claims**

1. A chain comprising modular link elements (1) of plastic material and arranged in two sets interconnected by cross-pieces (2) for supporting cables, hoses or the like, the elements in each set being connected by joints each of which comprises a male portion (5) on one element and a female portion (11A, 11B) on an adjacent element, the male portion being received by and pivoted to the female portion, and each cross-piece (2) having at each end a leg adapted for connection to one of the said elements, the distance therebetween defining the gauge of the chain, characterised by, intermediate the end legs, another leg (25) spaced at a different distance from each of the two end legs, whereby three different chain gauges can be obtained using either the entire cross-piece or one or other cross-piece produced by cutting the cross-piece at the intermediate leg.

2. A chain according to claim 1 wherein each cross-piece (2) is formed in two symmetrical halves (22, 23) each arranged to bridge the two sets of the elements with the legs on one half confronting or abutting the legs on the other half.

3. A chain according to claim 1 or claim 2, wherein relative pivotal movement of adjacent elements (1) is limited by co-operation of a projection (16) on one element and a recess (10) on the other element, the projection and recess being disposed such that they engage within the female portion (11A, 11B) at the root thereof, wherein each element has an ellipsoid form whereby, at the limit of pivotal movement, at least the outer edge (with respect to the curvature of the chain) of the elements in each set define a substantially continuous curved contour, and wherein the end of the female portion is curved and runs in a complementary curved recess (9) at the root of the male member.

## Patentansprüche

1. Kette, bestehend aus zusammensetzbaren Ketten-Gliedern (1) aus plastischem Material, welche in zwei, zum tragen von Kabeln, Schläuchen und dergleichen durch Querstücke (2) verbundenen Reihen satzartig angeordnet sind, wobei die Bauteile eines Ketten-Glied-Satzes durch Gelenke miteinander verbuden sind, deren jedes einen männlichen Teil (5) an dem einen benachbarten Ketten-Glied und einen weiblichen Teil (11a, 11b) an dem benachbarten Ketten-Glied aufweist, wobei der männliche Teil vom weiblichen Teil aufgenommen sowie gegenüber diesem verschwenkbar ist, und jedes Querstück (2) an jedem seiner beiden enden ein die Verbindung mit einem der Ketten-Glieder ermöglichendes sowie die Breite der Kette bestimmendes Fussteil aufweist, dadurch gekennzeichnet, dass die kette ein weiteres, von den endseitigen Fussteilen ungleiche Abstände aufweisendes sowie durch Verwendung entweder des gesamten Querstückes oder nach Trennung durch Verwendung eines längeren beziehungsweise kürzeren Querstück-Teiles wahlweise drei unterschiedliche Kettenbreiten ermöglichendes dazwischenliegendes Fussteil (25) aufweist.

2. Kette nach Anspruch 1, dadurch gekennzeichnet, dass jedes Querstück (2) aus zwei symmetrischen Hälften (22, 23) zusammengesetzt ist und dass jede dieser Hälften (22, 23) den Zwischenraum zwischen den beiden einen Satz bildenden Ketten-Gliedern überbrückend sich mit seinen Fussteiler gegen die Fussteile der anderen Hälfte abstützt.

3. Kette nach mindestens einem der Ansprüche 1 bezichungsweise 2, dadurch gekennzeichnet, dass die gegenseite Schwenkbewegung einander benachbarter Ketten-Glieder durch das zussammenwirken von einem vorragenden Teil (16) an dem einen Glied mit einer Vertiefung (10) im benachbarten Glied begrenzt ist, dass das vorragende Teil (16) und die Vertiefung (10) im weiblichen Teil (11a, 11b) an deren Wurzel zusammenwirkend ausgebildet sind, dass jeder Satz der ellipsoidförmigen Ketten-Glieder mit seinen Aussenkanten (in bezug auf die Krümmung der Kette) am einen Ende der Schwenkbewegung eine im wesentlichen stetig gekrümmte Kontur bestimmt und dass das Ende des als Kurve ausgebildeten weiblichen Teiles in einer komplementär gekrümmten Vertiefung (9) am Fusse des männlichen Teiles bewegbar ist.

## Revendications

1. Chaîne comprenant des éléments de maillons modulaires (1) en matière plastique, disposés en deux ensembles reliés par des entretoises (2) pour supporter des câbles, des tuyaux et similaires, les éléments dans chaque ensemble étant reliés par des joints dont chacun comprend une partie mâle (5) sur un élément, et une partie femelle (11a, 11b) sur un élément adjacent, la partie mâle étant reçue dans, et agencée à pivotement sur la partie femelle, et chaque entretoise (2) possédant à chacune des ses extrémités un bras agencé pour être connecté à l'un des dits éléments, la distance entre ces bras définissant la largeur de la chaîne, caractérisée en ce que la dite chaîne possède entre ses bras d'extrémité, un autre bras 25 disposé à une distance différente des deux bras d'extrémité, permettant ainsi la constitution de trois largeurs de chaîne différentes en utilisant soit l'entretoise entière, soit l'une ou l'autre entretoise produite en coupant l'entretoise au bras intermédiaire.

2. Chaîne suivant la revendication 1, caractérisée en ce que chaque entretoise (2) est formée de deux moitiés symétriques (22, 23), chacune disposée pour relier les deux ensembles d'éléments avec les bras d'une moitié se disposant en regard et au contact des bras de l'autre moitié.

3. Chaîne suivant les revendications 1 ou 2, caractérisée en ce que le mouvement de pivotement relatif des éléments adjacents (1) est limité par la coopération d'un ressaut (16) sur un élément, avec une partie en retrait (10) sur l'autre élément, le ressaut et la partie en retrait étant agencés pour qu'ils viennent en engagement dans la partie femelle (11a, 11b) à la base de celle-ci, chaque élément ayant une forme ellipsoïdale de sorte que, à l'extrémité du mouvement de pivotement, au moins l'arête extérieure (par rapport à la courbure de la chaîne) des éléments dans chaque ensemble définisse un contour courbe substantiellement continu, et l'extrémité de la partie femelle étant courbe et se logeant dans une cavité complémentaire courbe (9) à la base de la partie mâle.

*Fig. 1*

*Fig. 2*

*Fig. 3*

0 001 656

Fig. 4

0 001 656

Fig.5

Fig.6

Fig.7